# EUROPÄISCHE PATENTSCHRIFT

(11) **EP 1 873 014 B1**
(45) Veröffentlichungstag und Bekanntmachung des Hinweises auf die Patenterteilung: **30.12.2009**
(21) Anmeldenummer: 07012237.9
(22) Anmeldetag: 22.06.2007
(51) Int. Cl.: B60R 7/04, B62D 65/14

(54) **Konsole für ein Fahrzeug**
Console for a vehicle
Console pour véhicule

(30) Priorität: 19.12.2006 DE 202006019121 U; 01.07.2006 DE 102006030476
(43) Veröffentlichungstag der Anmeldung: 02.01.2008
(73) Patentinhaber: GM Global Technology Operations, Inc., Detroit, MI 48265-3000 (US)
(72) Erfinder: Arndt, Stefan, 65193 Wiesbaden (DE); Blanck, Matthias, 65779 Kelkheim (DE); Dorhöfer, Andreas, 65439 Flörsheim (DE); Fett, Uwe, 65468 Trebur (DE); Graf, Michael, 35638 Leun (DE); Renkel, Michael, 55283 Nierstein (DE)
(74) Vertreter: Strauss, Peter

(56) Entgegenhaltungen:
- DE-A1- 10 043 656
- DE-A1- 10 208 886
- US-B2- 6 726 267

## Beschreibung

Die Erfindung betrifft eine Konsole für ein Fahrzeug, insbesondere eine Mittelkonsole, mit einem Schienenpaar zur im Wesentlichen horizontal verschiebbaren Aufnahme von Einsätzen der Konsole zwischen den Schienen des Schienenpaars in Führungen der Schiene, sowie einem Stauraum zwischen den Einsätzen und dem Boden des Fahrzeugs.

Eine derartige Konsole ist aus der DE 102 08 886 A1 bekannt. Bei dieser sind mit dem Mitteltunnel des Fahrzeuges die beiden parallel verlaufenden Schienen befestigt. Auf dem so gebildeten Schienenweg befinden sich drei vor und zurück verschiebbare Container, die in geeigneter Weise in der jeweils erreichten Position arretiert werden können. Die Container können verschiedene Funktionen erfüllen. Sie dienen beispielsweise der Aufnahme von Utensilien, die der Fahrer benötigt, wie Kartenmaterial, Taschenlampen oder dergleichen. Sie können aber auch mit Fächern versehen sein, zur Aufnahme von CDs und Kassetten. Der jeweilige Container kann überdies als einfaches plattenartiges Gebilde ausgebildet sein, mit Durchbrüchen zur Aufnahme von Getränkedosen und dergleichen.

Die Konsole ist zur Seite hin geschlossen, somit nur nach oben offen. Zwischen den Einsätzen und dem Boden des Fahrzeugs ist, abgesehen von dem Stauraum in den Einsätzen ein weiterer Stauraum gebildet. Eine konkrete Ausführungsform der Konsole ist derart gestaltet, dass die Einsätze oben im Wesentlichen mit den Schienen abschließen, somit sich deutlich unterhalb des Schienenniveaus erstrecken. Demzufolge verbleibt nur ein geringer Platz zwischen den Einsätzen und dem Boden des Fahrzeugs als weiterer Stauraum. Werden keine Einsätze von den Schienen aufgenommen, ergibt sich ein einziger, großer Stauraum innerhalb der Konsole, der nur von oben zugänglich ist.

Konsolen für Fahrzeuge sind des Weiteren aus der US 6,547,299 B2, JP 2000255323 A, DE 197 37 739 A1 und DE 198 08 381 A1 bekannt.

Aufgabe der vorliegenden Erfindung ist es, eine Konsole der eingangs genannten Art so weiter zu bilden, dass diese bei baulich einfacher Gestaltung eine hohe Flexibilität hinsichtlich des in diesem Bereich nutzbaren Stauraums bietet und unter diesem Aspekt sowohl mit als auch ohne Einsätze vorteilhaft genutzt werden kann. Ferner soll sichergestellt sein, dass das Schienenpaar und damit auch die von diesem aufgenommenen Einsätze exakt bezüglich an diese angrenzender Interieur-Elemente, insbesondere exakt bezüglich der Instrumententafel des Fahrzeugs ausgerichtet sind.

Gelöst wird die Aufgabe bei einer Konsole der eingangs genannten Art dadurch, dass die Schienen als freistehende Bügel ausgebildet sind, wobei die Schienen mit ihren hinteren Enden im Boden des Fahrzeugs gelagert sind und im Bereich ihrer vorderen Enden in einem Halter für die Instrumententafel des Fahrzeugs oder in einem Halter für eine Abdeckung eines Schalt- oder Wählhebels des Fahrzeugs gelagert sind, wobei die Schienen vorne mittels eines zweiteiligen Lagerelements im Halter gelagert sind und die beiden miteinander verbundenen Lagerelementteile des Lagerelements zueinander ausrichtbar sind.

Bei der erfindungsgemäßen Konsole gestaltet sich somit die Lagerung der einzelnen Einsätze baulich sehr einfach. Die Lagerung erfolgt in den Bügeln, wobei diesen Bügeln nicht nur die Aufgabe zukommt, der Führung der Einsätze zu dienen, sondern die Bügel auch das tragende Teil der Einsätze darstellen, wobei die Bügel ortsfest im Fahrzeug gelagert sind. Diese Lagerung der freistehenden Bügel erfolgt im Bereich deren hinteren Enden im Boden des Fahrzeugs und im Bereich deren vorderen Enden im Halter für die Instrumententafel des Fahrzeugs oder im Halter für die Abdeckung des Schalt- oder Wählhebels des Fahrzeugs. Dieses bedeutet, dass zumindest der hintere Lagerbereich der Bügel tiefer liegt als der Bereich, in dem die Führungen der Bügel vorgesehen sind.

Das vordere Ende des jeweiligen Bügels ist vorzugsweise deutlich oberhalb des Bodenniveaus des Fahrzeugs gelagert. Diese Gestaltung ermöglicht es, den jeweiligen Bügel geometrisch sehr einfach auszubilden, im wesentlichen in Form eines abgerundeten L, somit mit einem langen Abschnitt, der die mindestens eine Führung aufweist und einem kurzen Abschnitt, der die Distanz zwischen dem die Führung aufweisenden Abschnitt des Bügels und dem Boden des Fahrzeugs überbrückt. Die freien Enden der langen Abschnitte der Bügel sind mit dem zweiteiligen Lagerelement verbunden, das im Halter für die Instrumententafel oder dem für den Schalthebel/Wählhebel verbunden ist. Das freie Ende des kurzen Abschnitts des jeweiligen Bügels ist mit dem Boden des Fahrzeugs befestigt.

Dadurch, dass die Schienen vorne mittels des zweiteiligen Lagerelements im Halter gelagert sind und die beiden miteinander verbundenen Lagerelemente des Lagerelements zueinander ausrichtbar sind, besteht die Möglichkeit einer präzisen Ausrichtung des Schienenpaares bzw. der vom Schienenpaar getragenen Einsätze bezüglich der Instrumententafel. So ist beispielsweise in der Instrumententafel eine Ausnehmung vorgesehen, in die die Einsätze eingeschoben werden können. Bei einer Ausrichtung des Schienenpaares bezüglich der Instrumententafel ist auf ein einwandfreies Spaltbild zum Schienenpaar und/oder zu den Einsätzen zu achten, welches auf einfache Art und Weise aufgrund der Ausrichtbarkeit der beiden Lagerelementteile zueinander bewirkt werden kann.

Es wird als besonders vorteilhaft angesehen, wenn die beiden Lagerelementteile des Lagerelements in zwei Koordinatenrichtungen zueinander ausrichtbar sind. Insbesondere sollten die beiden Lagerelementteile senkrecht zur Längserstreckung der Schienen in den zwei Koordinatenrichtungen zueinander ausgerichtet werden können. Dies kann auf besonders einfache Art und Weise durch eine Verschraubung der beiden Lagerelementteile bewerkstelligt werden, mit Langlöchern, die die Relativverschiebung der beiden Lagerelementteile aufgrund des einen Langlochs in Längsrichtung des einen Langlochs und aufgrund des anderen Langlochs in Längsrichtung des anderen Langlochs ermöglichen.

Gemäß einer besonderen Ausführungsform der Erfindung ist vorgesehen, dass der jeweilige Bügel zwei übereinander angeordnete Führungen zur Aufnahme von Einsätzen in unterschiedlichen Ebenen aufweist. Dies ermöglicht es, die Konsole variabel zu bestücken. Es kann beispielsweise ein Einsatz verwendet werden, der eine große Bauhöhe aufweist und der sich bei Lagerung in der oberen Führung bis in den Bereich unterhalb der unteren Führung erstreckt. Es können auch Einsätze geringerer Bauhöhe verwendet werden, wobei ein solcher Einsatz, wenn er in der oberen Führung gehalten ist, nicht in den Bereich der unteren Führung gelangt, sondern in diesem Bereich der andere Einsatz geringer Bauhöhe vorgesehen ist. Es ist durchaus auch eine Kombination zwischen Einsätzen großer und Einsätzen geringer Bauhöhe möglich.

Die jeweilige Führung ist insbesondere in einem oberen Endbereich der zugeordneten Schiene offen. Es besteht somit die Möglichkeit, den jeweiligen Einsatz von hinten in die Führung einzuschieben, und zwar in dem Bereich des jeweiligen Bügels, in dem dieser aufgrund seiner abgerundeten L-Form gebogen ist. Diese Gestaltung gestattet es somit, einfach den jeweiligen Einsatz aus den Bügeln herauszunehmen bzw. die Konsole mit den Einsätzen zu bestücken. Dies trägt erheblich zur Erhöhung der Flexibilität der Konsole bei. Zweckmäßig sind Mittel zum Verriegeln der Einsätze bezüglich der Führungen vorgesehen. Hierdurch ist ein sicherer Halt der Einsätze während der Fahrt gewährleistet.

Die Bügel bestehen vorzugsweise aus Metall oder Kunststoff. Es ist durchaus auch eine Materialkombination aus Metall und Kunststoff denkbar.

Aufgrund der erfindungsgemäßen Gestaltung der Konsole mit den frei stehenden Bügeln, die der Aufnahme der Einsätze dienen, ist eine variable Nutzung des Fahrzeugs im Bereich der Konsole möglich. Sind keine Einsätze in die Bügel eingesetzt, stellt sich der von der Konsole genutzte Raum nur als Anordnung der beiden frei stehenden Bügel dar, die zumindest mit dem Boden, insbesondere mit dem Boden und den Haltern für die Instrumententafel bzw. Schalthebel/Wählhebel verbunden sind. Demzufolge können in diesem Raum Gegenstände eingebracht werden, beispielsweise ein paar Skier, das zwischen die beiden Bügel eingelegt ist. Andererseits ist der Raum der von den beiden Bügeln umgeben wird, auch von der Seite frei zugänglich, somit bei Anordnung der Konsole zwischen den Vordersitzen des Fahrzeuges sowohl für den Fahrer als auch für den Beifahrer zugänglich. Ist die Konsole mit einem oder mehreren Einsätzen bestückt, sind diese gleichfalls bestens zugänglich und bieten einen optimalen Stauraum für die unterschiedlichsten Gegenstände. Der unterhalb der Einsätze gebildete weitere Stauraum ist gleichfalls gut zugänglich, insbesondere von der Seite, da die Schienen als frei stehende Bügel gestaltet sind.

Gemäß einer besonderen Weiterbildung der Erfindung ist vorgesehen, dass die Konsole einen Grundträger aufweist, der im Boden gelagert ist, insbesondere mit diesem befestigt ist. Dieser Grundträger ist somit im unteren Bereich der Konsole angeordnet, zwischen den seitlich zu diesem angeordneten frei stehenden Bügeln. Während die Hauptfunktion der Bügel darin besteht, die Einsätze aufzunehmen, besteht die Hauptfunktion des Grundträgers darin, elektrische oder sonstige Komponenten, die auf dem Boden bzw. entlang des Mitteltunnels laufen, zu verdecken. Weiterhin kann der Grundkörper als Stauraum benutzt werden. Der Grundkörper folgt der Bodenstruktur und den elektrischen Komponenten. Dadurch entstehen Vertiefungen, die als Abstellflächen benutzt werden können. Je nach Formgebung erhält man verschiedenste Einteilungen: rund als Cup-Holder oder Halter für den Aschenbecher, Stege zur Aufnahme von CDs, usw. Die Fächer können zusätzlich mit einer Abdeckung mit einem einfachen Deckel oder einem Rollo versehen sein.

Die Einsätze bilden neben dem Grundträger den eigentlichen Stauraum. Je nach Ausführung und Aufteilung können verschiedene Einsatztypen Verwendung finden, die insbesondere konkret auf den Nutzerkreis abgestimmt sind. Es ist denkbar, eine Office-Box, eine Box für Kinder, insbesondere mit Spielzeug, eine Box für die Versorgung von Kindern, eine Raucherbox vorzusehen, ferner Einsätze die einfacher gestaltet sind und insbesondere der Aufnahme von Brillen, CDs oder als Cup-Holder dienen. Es ist schließlich denkbar, Einsätze mit elektrischen Anschlüssen vorzusehen, beispielsweise eine elektrische Kühlbox. Die einzelnen Einsätze/Boxen können wiederum einen Deckel oder einen Rollo erhalten, um einen abgeschossenen Raum zu gestalten, der zusätzlich mit einem Schloss gesichert werden kann. Die Einsätze besitzen Führungen, die ein Herausspringen verhindern. Je nach Rastsystem ist mindestens ein Befestigungsmechanismus zum Verriegeln der Einsätze vorhanden. Dieser weist beispielsweise einen Druckknopf zum Ver- bzw. Entriegeln auf. Die Einsätze können mit einfacher Wand oder solide mit einer Doppelwand dargestellt werden.

Die Konsole mit den Bügeln an der Seite und insbesondere zwei übereinander angeordneten Führungen in den Bügeln bietet folgende Flexibilität: Ist kein Einsatz eingeschoben, dient der Grundträger als Stauraum für große Gegenstände, wie Handtaschen; auch ein Durchladen langer Gegenstände, wie Skier, ist möglich. Sind kleine Einsätze in den Bügeln gehalten, können diese hintereinander aber auch übereinander angeordnet werden. Für den Fall der Aufnahme von großen Einsätzen können diese hintereinander angeordnet werden. Bei Aufnahme sowohl großer als auch kleiner Einsätze mittels der Bügel können kleine Einsätze übereinander angeordnet werden, vor oder hinter einem großen Einsatz.

Im Normalfall weist der jeweilige Bügel zwei übereinander angeordnete Führungen auf. Es reicht grundsätzlich aus, wenn im jeweiligen Bügel eine Führung vorhanden ist. Es können aber durchaus auch mehr als zwei Führungen, die übereinander angeordnet sind, im jeweiligen Bügel vorgesehen sein. Angebunden werden die Schienen zweckmäßig mittels Schrauben und Muttern.

Die Erfindung schlägt somit eine flexible Konsole vor, die ganz der jeweiligen Situation angepasst werden kann. Die Konsole bietet eine Durchlademöglichkeit bei herausgenommenen Einsätzen. Große Gegenstände können zwischen den Sitzen positioniert werden, sobald die Einsätze entfernt sind. Bei Verwendung von Einsätzen ermöglicht ein Verschieben der Einsätze auf mehreren Ebenen ein gleichzeitiges Benutzen aller Einsätze. Große Gegenstände können bis auf den Boden gestellt werden und trotzdem können Einsätze weiterhin benutzt werden. Ein Lagern großer langer Gegenstände unterhalb der Einsätze ist möglich.

Die beschriebene Konsole bietet bei baulich einfacher Gestaltung eine hohe Flexibilität hinsichtlich des in diesem Bereich nutzbaren Stauraums. Gemäß einer Weiterbildung der Erfindung ist diese Funktionalität nicht auf die Bereitstellung von Stauraum beschränkt, sondern es kann die Konsole eine erweiterte Funktionalität aufweisen. So ist vorgesehen, dass das Schienenpaar zwischen Sitzen des Fahrzeugs angeordnet ist und bei einem Seitencrash zumindest durch den der Crashseite des Fahrzeugs zugewandten Sitz, die Schienen und mindestens einen der Einsätze ein Lastpfad für bei einem Seitencrash in das Fahrzeug eingeleitete Kräfte gebildet ist. Die Konsole besitzt somit neben der Funktionalität der Schaffung von Stauraum die Funktionalität eines Crashelements, das die Crashperformance im Innenraum, zwischen den Sitzen erhöht. Bei einem Seitencrash ist somit nicht nur der Lastpfad der Bodengruppe des Fahrzeugs wirksam, sondern zusätzlich der Lastpfad zwischen den Sitzen. Die Konsole stellt sicher, dass sich im Falle des Seitencrashs die Sitze nicht wesentlich annähern können, womit eine Gefährdung der Fahrzeuginsassen hinsichtlich Körperberührung, insbesondere hinsichtlich des Aneinanderschlagens der Oberkörper und/oder Köpfe der Fahrzeuginsassen wirksam reduziert ist. Um die Crashperformance zu steigern ist vorgesehen, dass die einzelnen Bauteile der Konsole als energieabsorbierende und deformierbare Elemente ausgebildet sind. Es wird als zweckmäßig angesehen, wenn die jeweilige Schiene als Kammerprofil, insbesondere als Hohlkammerprofil ausgebildet ist. Insbesondere bei der Ausbildung der jeweiligen Schiene als Hohlkammerprofil wird ein Deformationsweg innerhalb des Profils geschaffen. Von besonderer Bedeutung ist gleichfalls die Ausbildung des jeweiligen Einsatzes, der auch als Modul bezeichnet werden kann. Der jeweilige Einsatz ist vorzugsweise doppelwandig ausgebildet. Hierdurch ergibt sich eine wesentlich höhere Steifigkeit des Einsatzes. Wichtig ist, dass die Einsätze während des Seitencrashs nicht zerstört werden und so im Schienenpaar gelagert sind, dass sie sich nicht vom Schienenpaar lösen, da sonst der Kraftfluss unterbrochen würde. Gemäß einer bevorzugten Gestaltung ist der jeweilige Einsatz schalenförmig ausgebildet, womit Wandungsbereiche des doppelwandigen Einsatzes beabstandet zueinander angeordnet sind. Die hohle Ausbildung des Einsatzes wird somit als vorteilhaft angesehen.

Eine erweiterte Funktionalität der Konsole ergibt sich ferner, wenn die Schienen im Bereich ihrer hinteren Enden im Boden des Fahrzeugs gelagert sind und im Bereich ihrer vorderen Enden in einem Halter für die Instrumententafel des Fahrzeugs oder in einem Halter für eine Abdeckung eines Schalt- oder Wählhebels des Fahrzeugs gelagert sind, wobei das Schienenpaar bei einem Frontalcrash einen Lastpfad zwischen dem Halter und dem Boden bildet. Bei einem Frontalcrash ist somit nicht nur der Lastpfad der Bodengruppe des Fahrzeugs wirksam, sondern zusätzlich der Lastpfad vom Halter zum Schienenpaar und von dort zum Boden des Fahrzeugs.

Bevorzugte Weiterbildungen der Erfindung ergeben sich aus den abhängigen Unteransprüchen und der nachfolgenden Beschreibung.

Nachfolgend werden Ausführungsbeispiele der Erfindung, ohne hierauf beschränkt zu sein, unter Bezugnahme auf die Zeichnung näher erläutert. Es zeigt:
- Figur 1: eine räumliche Ansicht des Innenraumes eines Personenkraftwagens mit der erfindungsgemäßen Konsole, allerdings bei nicht in die Bügel eingeschobenen Einsätzen,
- Figur 2: einen Längsmittelschnitt durch das Fahrzeug im Bereich des Bodens mit dem mit dem Boden verbundenen Grundträger der Konsole,
- Figur 3: einen Schnitt durch den Bodenbereich des Fahrzeuges, quer zu dessen Längserstreckung geschnitten, zur Verdeutlichung der hinteren Befestigung des Grundträgers am Boden,
- Figur 4: einen Längsschnitt durch das Fahrzeug zur Verdeutlichung der vorderen Befestigung des Grundkörpers in einem Halter für eine Verkleidung der Lagerung des Schalt-/Wählhebels,
- Figur 5: eine räumliche Ansicht des vorderen Befestigungsbereichs der beiden Bügel im Halter für die Verkleidung der Lagerung des Schalt-/Wählhebels,
- Figur 6: eine räumliche Ansicht der hinteren Befestigung der beiden Bügel am Boden des Fahrzeugs,
- Figur 7: einen Schnitt durch den hinteren Befestigungsbereich der beiden Bügel, quer zur Längserstreckung des Fahrzeugs geschnitten,
- Figur 8: eine modifizierte Gestaltung der beiden Bügel in geteilter Anordnung, veranschaulicht bei miteinander verbundenen Bügeln,
- Figur 9: eine Darstellung der Bügel gemäß Figur 8, vor dem Verbinden der beiden Bügel,
- Figur 10: eine weitere Gestaltung der geteilten Bügelanordnung, bei miteinander verbundenen Bügeln,
- Figur 11: die in Figur 10 veranschaulichte Bügelanordnung, vor dem Verbinden der beiden Bügel,
- Figur 12: eine räumliche Ansicht des Fahrzeuginnenraums mit erfindungsgemäßer Konsole bei eingeschobenen oberen und unteren Einsätzen,
- Figur 13: eine Ansicht gemäß Figur 12, gleichfalls bei eingeschobenen oberen und unteren Einsätzen, allerdings in anderer Stellung der Einsätze zueinander,
- Figur 14: eine Ansicht gemäß der Figuren 12 und 13, nur bei eingeschobenem oberen Einsatz,
- Figur 15: eine Ansicht gemäß der Figuren 12 bis 14, nur bei eingeschobenem unteren Einsatz,
- Figur 16: eine Ausführungsform in räumlicher Ansicht, bei der die Schienen im Bereich ihrer vorderen Enden in einem Halter für die Instrumententafel gelagert sind,
- Figur 17: eine Ausführungsform nach Figur 16, in einer Seitenansicht und
- Figur 18: eine Darstellung der Anordnung der Schienen mit in diesen gehaltenen Einsätzen zwischen Fahrersitz und Beifahrersitz, im Bereich eines Sitzträgers geschnitten.

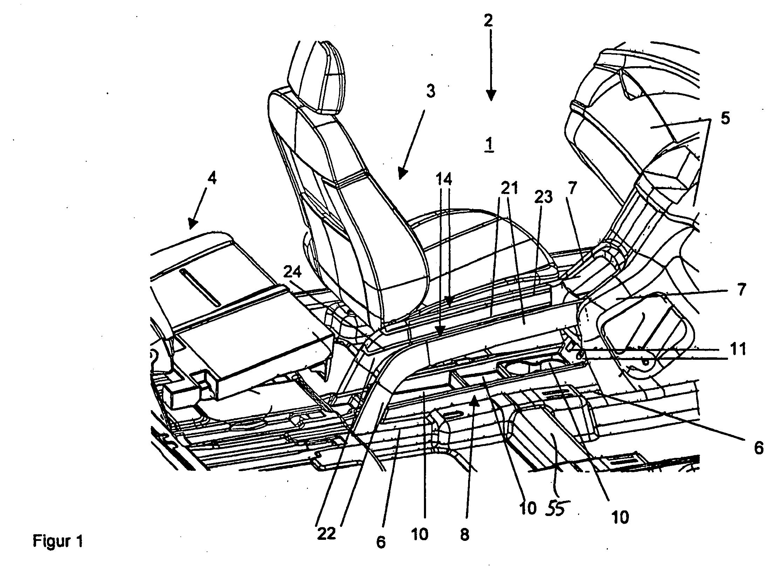

Figur 1 veranschaulicht für den Innenraum 1 des Personenkraftwagens 2 den Fahrersitz 3 und den teilweise dargestellten Rücksitz 4, die Instrumententafel 5 sowie die oberhalb des Mitteltunnels 6 des Fahrzeuges in dessen vorderen Bereich angeordneten Verkleidungen 7 des Lagerbereichs des nicht gezeigten Schalt-/Wählhebels des Fahrzeugs.

Im Mitteltunnel 6 ist ein Grundträger 8 der Konsole 9 gelagert. Der Grundträger 8 erstreckt sich von der Instrumententafel 5 über den gesamten Mitteltunnel 6 bis zu den Rücksitzen 4. Die Form ist so gestaltet, dass sich Fächer und Einteilungen, die mit der Bezugsziffer 10 bezeichnet sind, ergeben, wodurch der Grundträger 8 als Basiskonsole benutzt werden kann. Die Fächer bzw. Einteilungen 10 können beispielsweise Fächer für CDs, Vertiefungen als Cup-Holder usw. sein. Im vorderen Bereich des Grundträgers 8 sind Aufnahmen 11 für elektrische Komponenten, wie Zigarettenanzünder, 12 V Steckdose, USB-Ausgang usw. vorgesehen. Der Grundträger verdeckt unterhalb diesem angeordnete elektronische Komponenten wie Crash-Sensoren, Kabelstränge usw. Luftführungen und Klimastränge für den Fond, sowie alle sonst noch notwendigen Bauteile.

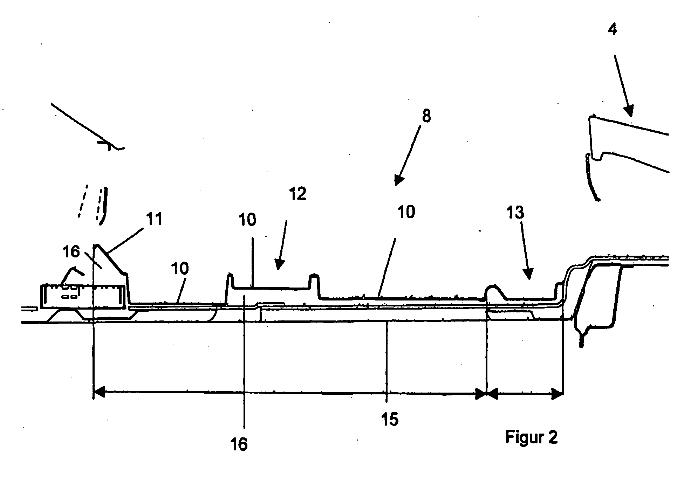

Der Grundträger 8 besteht, wie insbesondere der Darstellung der Figur 2 zu entnehmen ist, wegen der Montagereihenfolge aus zwei Teilen, nämlich einem großen, vorderen Teil 12 des Grundträgers 8 und einem kurzen, hinteren Teil 13 des Grundträgers 8. Das vordere Teil 12 ist unterhalb der beiden noch näher zu beschreibenden Bügel 14 der Konsole angeordnet und das hintere Teil 13 bildet den Abschluss zum Höhensprung des Bodens 15 des Fahrzeugs im Bereich der Rücksitze 4 und deckt die noch näher zu erörternden hinteren Schraubpunkte der Bügel 14 ab. Hierdurch ergibt sich folgende Montagereihenfolge: zunächst wird das vordere Teil 12 montiert, dann die beiden Bügel 14 und schließlich das hintere Teil 13. Befestigt werden die Einzelteile des Grundträgers 8 durch Blechhalter. Die beiden Einzelteile 12 und 13 des Grundträgers 8 überlappen sich.

In der Figur. 2 ist ein zwischen dem vorderen Teil 12 und dem Boden 15 gebildeter Aufnahmeraum 16 für elektronische Komponenten, wie Crash-Sensoren veranschaulicht.

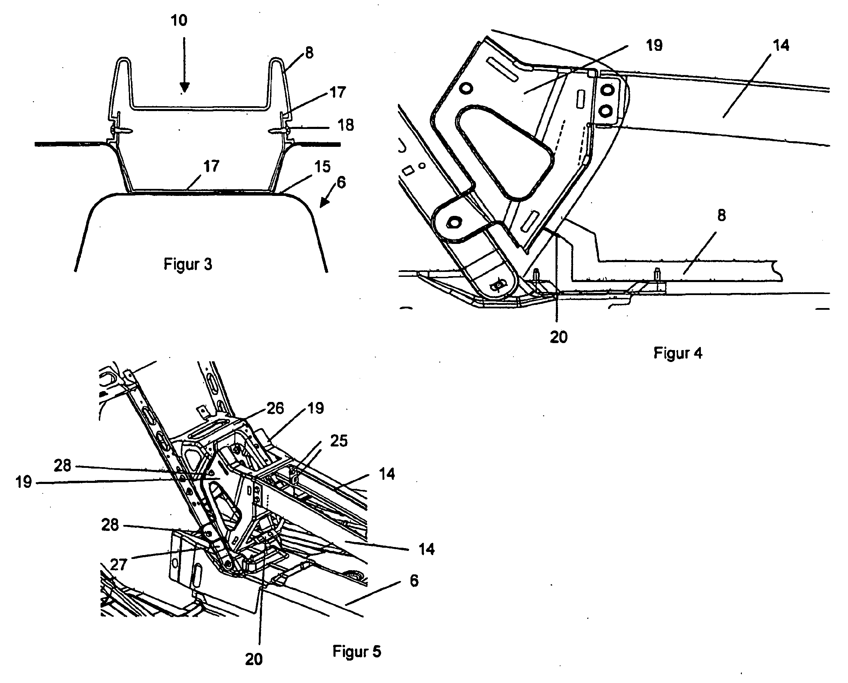

Figur 3 verdeutlicht die Befestigung des Grundträgers 8 am Boden 15. Der Grundträger 8 wird mittels Blechhaltern 17 und Schrauben 18 befestigt. Die Blechhalter 17 können aus einem relativ dünnen Blech hergestellt werden, da sie keine größeren Kräfte aufnehmen müssen. Die Blechhalter 17 werden auf den Mitteltunnel 6 geschweißt, können aber auch angeschraubt werden. Der Grundträger 8 ist seitlich mit den Blechhaltern 17 verschraubt.

Figur 4 veranschaulicht die Lagerung des Grundträgers 8 im Bereich seines vorderen Endes in zwei im wesentlichen parallel zueinander angeordneten Haltern 19 für eine Verkleidung der Lagerung des Schalt-/Wählhebels. Wie zur Ausführungsform nach der Figur 3 beschrieben, ist das vordere Ende des Grundträgers 8 mit dem Halter 19 verschraubt. Der Grundträger 4 liegt dabei auf einer Abstellung 20 des Halters 19 auf; dort erfolgt die Verschraubung.

Wie insbesondere der Darstellung der Figur 1 zu entnehmen ist, weist die Mittelkonsole 6 neben dem Grundträger 8 die beiden Bügel 14 auf. Der jeweilige Bügel ist im Wesentlichen L-förmig ausgebildet, mit einem langen Schenkel 21 und einem kurzen Schenkel 22. Der Übergang zwischen den beiden Schenkeln 21 und 22 ist als Krümmung ausgebildet, so dass die Schenkel einen stumpfen Winkel miteinander einschließen. Der lange Schenkel 21 ist geringfügig zur Horizontalen geneigt angeordnet, mit einer Neigung von vorn nach hinten. Gelagert ist der jeweilige Bügel 18 im Bereich des vorderen Endes seines Schenkels 21 in noch näher zu beschreibende Art und Weise im Halter 19. Der andere Schenkel 22 des jeweiligen Bügels 14 ist, gleichfalls in noch näher zu beschreibende Art und Weise mit dem Boden 15 verbunden.

Der jeweilige Bügel 14 weist im Bereich seines Schenkels 21 zwei im Wesentlichen horizontal angeordnete, übereinander liegende Führungen - obere Führung 23 und untere Führung 24 - auf. Im Bereich ihres hinteren Endes sind die Führungen 23 und 24 offen, so dass von hinten nach vorne noch näher zu beschreibende Einsätze, die Bestandteil der Konsole 9 bilden, in die Bügel 14 eingeschoben werden können. Die jeweilige Führung 23 bzw. 24 ist somit im oberen Endbereich des Bügels, demnach in Abstand zum Boden 15 offen. Aufgrund der Gestaltung der L-förmigen Bügel 14 ist zwischen dem jeweiligen Bügel 14 und dem Boden 15 des Fahrzeuges ein Raum gebildet, der sowohl von der Seite, demnach vom Fahrer als auch vom Beifahrer zugänglich ist, und der überdies von oben zugänglich ist.

Die beiden Bügel 14 bestehen aus Aluminium. Sie werden an zwei Punkten an die Struktur angebunden - vorne an der Instrumententafel 5, hinten am Boden 15. Hierzu werden Schrauben und/oder Muttern verwendet.

Figur 5 veranschaulicht die Befestigung der Bügel im Bereich der Instrumententafel konkret am Halter 19 für die Verkleidung der Lagerung des Schalt-/Wählhebels.

Die beiden Bügel 14 werden am Halter 19 jeweils mittels zweier Schrauben 25 befestigt. Der Halter 19 ist beispielsweise aus Aluminium-Druckguss, Magnesium-Druckguss oder aus Blech hergestellt. Der Halter 19 wird am eigentlichen Halter 26 des Schalt-/Wählhebels und einer Crash-Strebe 27 mit jeweils einer Schraube 28 befestigt.

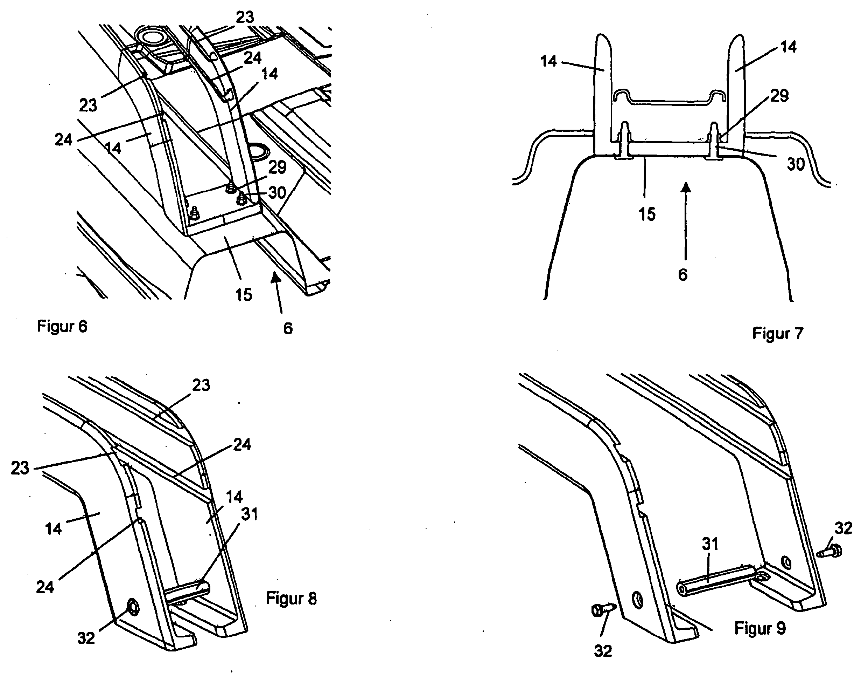

Die Figuren 6 und 7 veranschaulichen die Befestigung der Bügel 13 in ihrem hinteren Bereich am Boden 15 des Mitteltunnels 6, wobei bei dieser Ausführungsform die beiden Bügel 14 eine Einheit bilden.

Diese Einheit wird am Mitteltunnel 6 mittels Muttern 29, die auf Schweißbolzen 30 geschraubt werden, befestigt.

Die Figuren 8 und 9 veranschaulichen die Befestigung des hinteren Endes der beiden Bügel 14 am Boden 15, wobei die Bügel 14 keine Einheit bilden, sondern es sich um ein geteiltes Rail handelt. Um die Parallelität der Führung in den Bügeln 14 zu gewährleisten und den Einbau der Bügel 14 an einem Stück zu ermöglichen, werden diese zunächst miteinander verbunden. Dies kann durch einen Abstandsbolzen 31 mit Innengewinde geschehen, in den Schrauben 32 gedreht werden. Das eigentliche Verbinden der so gebildeten Einheit der beiden Bügel 14 mit dem Boden 15 erfolgt wie zur Ausführungsform nach den Fig. 6 und 7 beschrieben.

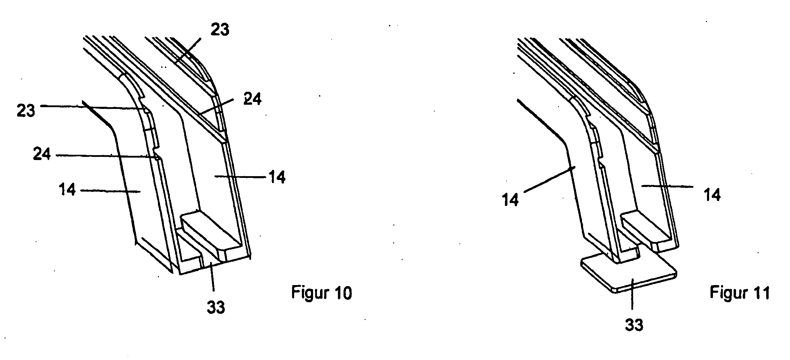

Eine weitere Möglichkeit, die beiden Bügel 14 miteinander zu verbinden, ist in den Figuren 10 und 11 veranschaulicht. Sie besteht darin, eine Verbindungsplatte 33 durch Schweißen oder Schrauben anzubringen, wobei bei dem Verbindungsgang der genaue Abstand einzuhalten ist. Auch bei dieser Gestaltung der Bügel 14 erfolgt die Verbindung der Bügel mit dem Boden 15 wie zur Ausführungsform nach den Figuren 6 und 7 beschrieben.

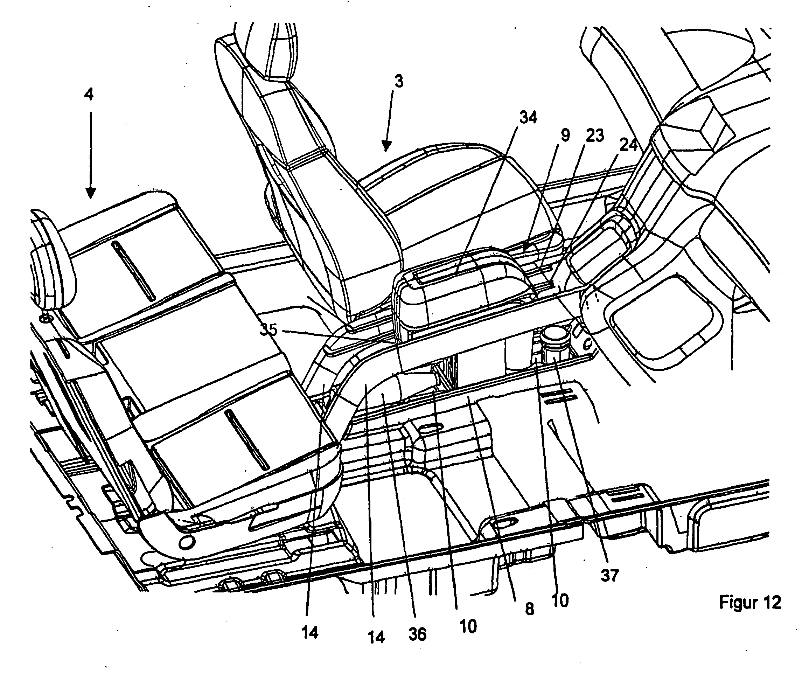

Die Figuren 12 bis 15 veranschaulichen zusätzlich in die beiden Bügel 14 der Konsole 9 eingeschobene Einsätze, wobei ein in die oberen Führungen 23 der Bügel 14 eingeschobener oberer Einsatz mit der Bezugsziffer 34, ein in die unteren Führungen 24 der Bügel 14 eingeschobener unterer Einsatz mit der Bezugsziffer 35 verzeichnet ist.

Figur 12 zeigt den oberen Einsatz 34 und den unteren Einsatz 35 in seiner in die Bügel 14 eingeschobenen Stellung. Der obere Einsatz 34 ist genau über dem unteren Einsatz 35 positioniert. Der Grundträger 8 ist mit Gegenständen beladen, beispielsweise nehmen dessen Fächer/Einteilungen 10 eine Flasche 36 und einen Tonnenaschenbecher 37 bzw. Dose, einen Becher 38 und Compact-Discs 40 auf. Nicht gezeigt sind Klemmelemente der Einsätze 34, 35, die dem sicheren Festlegen des jeweiligen Einsatzes in den Führungen 23 bzw. 24 in jeder beliebigen Stellung des Einsatzes dienen.

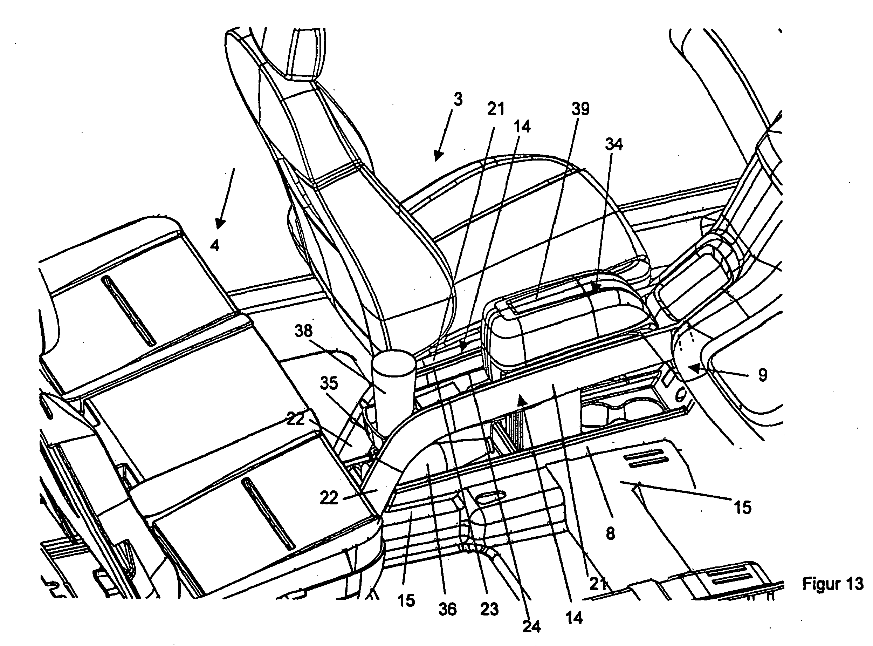

Figur 13 veranschaulicht die in die Bügel 14 eingeschobenen oberen und unteren Einsätze 34, 35. Allerdings stehen diese beiden Einsätze 34, 35 nicht genau übereinander. Demzufolge ist sowohl der obere Einsatz 34 als auch der untere Einsatz 35 zu erreichen. In den oben offenen unteren Einsatz 35, der sich in seiner hinteren Stellung befindet, ist ein Becher 38 eingesetzt. Der sich in seiner vorderen Stellung befindende obere Einsatz 34 ist mit einem Deckel 39 verschlossen, der geöffnet werden kann.

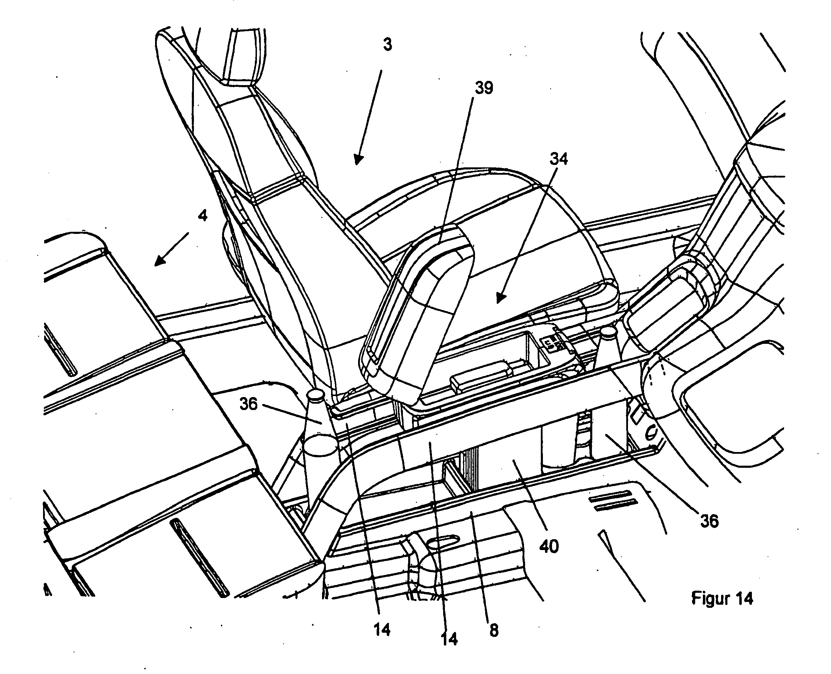

Figur 14 veranschaulicht einen Zustand, bei dem nur der obere Einsatz 34, der bei angehobenem Deckel 39 veranschaulicht ist, in die beiden Bügel 14 eingeschoben ist. Unterhalb dieses oberen Einsatzes 34 verbleibt damit ein Stauraum des Grundträgers 8 größerer Höhe, somit ein bis zur Unterkante des oberen Einsatzes 34 reichender Stauraum. Das zentrale Fach 10 des Grundträgers 8 nimmt beispielsweise eine Vielzahl Compact-Discs 40 auf. Grundsätzlich könnte auch nur ein oberer Einsatz 34 vorgesehen sein, der aber eine größere Höhe aufweist und damit in den Raum, der sonst vom unteren Einsatz 35 aufgenommen wird, ragt.

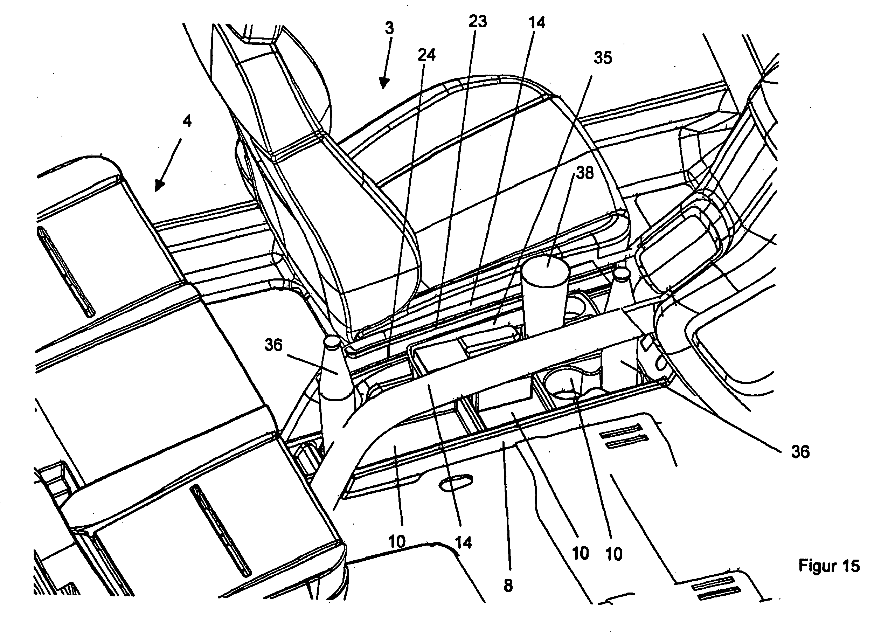

Figur 15 zeigt eine Variante, bei der nur der untere Einsatz 35 in die Bügel 14 eingeschoben ist. Der untere Einsatz 35 hat keinen Deckel. Der Grundträger 8 ist beladen.

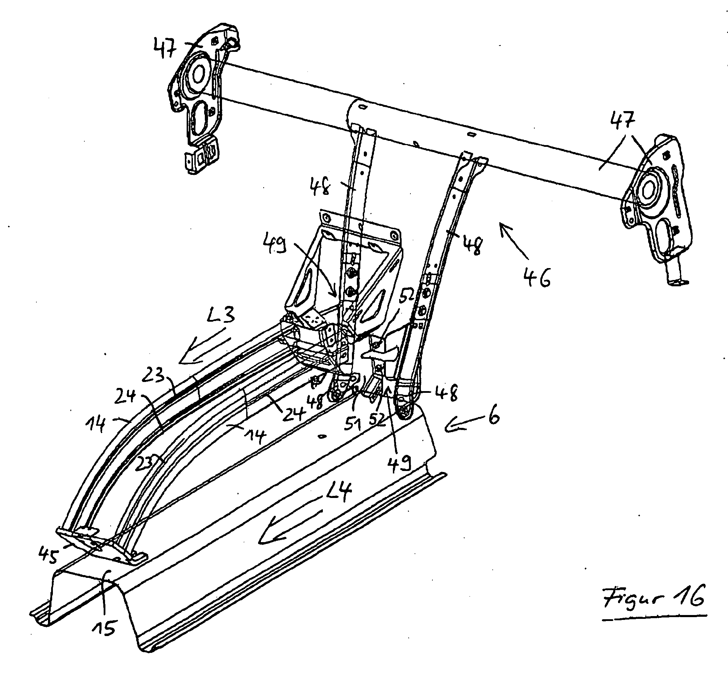

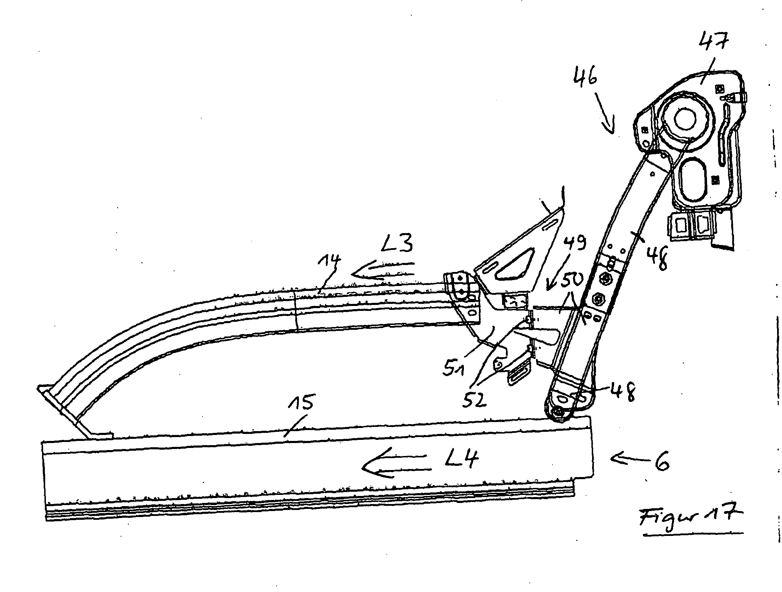

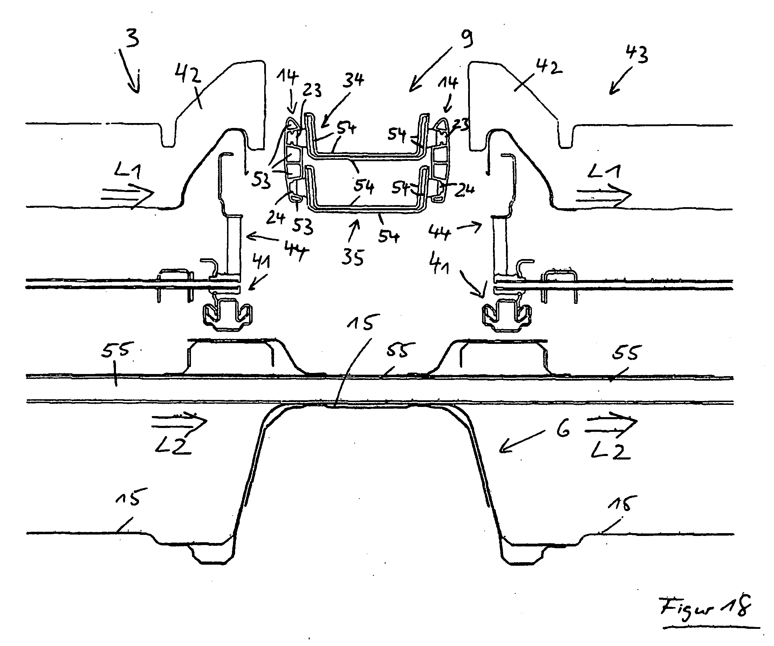

Die Ausführungsform nach den Figuren 16 bis 18 veranschaulicht den Boden 15 im Bereich des Mitteltunnels 6. Dort sind die der Konsole zugewandten Sitzschienen 41, die dem Bereich der Konsole 9 zugewandten Bereiche der seitlichen Sitzwülste 42 von Fahrersitz 3 und Beifahrersitz 43 sowie des Sitzquerträgers 55 zur Aufnahme der beiden Sitze 3 und 43 veranschaulicht. Die interne Tragstruktur der beiden Sitze 3 und 43 im Bereich der genannten Sitzwülste 42 ist mit der Bezugsziffer 44 bezeichnet. Die beiden Schienen bzw. Bügel 14 sind im Bereich ihrer hinteren Enden mit einer Lagerplatte 45 verbunden, die mit dem Boden 15 verbunden ist. Die freistehenden Schienen 14 sind im Bereich ihrer vorderen Enden in einem Halter 46 für die Instrumententafel des Fahrzeugs gelagert. Dieser Halter 46 besteht aus einem Instrumentenquerträger 47 und einer Crashstütze 48, die mit dem Boden 15 verbunden ist. Im Halter 46, konkret der Crashstrebe 48, ist ein zweiteiliges Lagerelement 49 gelagert. Dessen eines Lagerelementteil 50 ist mit der Crashstrebe 48 verbunden und dessen anderes Lagerelementteil 51 mit den beiden Bügeln 14. Die beiden Lagerelementteile 50 und 51 sind mittels einer Schraubverbindung 52 miteinander verbunden, wobei die Lagerelementteile 50 und 51 senkrecht zur Längserstreckung der Schienen 14 in den zwei Koordinatenrichtungen, in Y- und Z-Richtung zueinander ausrichtbar sind. Dies ermöglicht es, die Schienen 14 und damit die Konsole 19 seitlich und in der Höhe bezüglich der Instrumententafel auszurichten. Nach der Ausrichtung der beiden Lagerelemente 50, 51 zueinander werden diese durch Anziehen der Schraubverbindung 52 fest miteinander verbunden.

Die beiden Schienen 15 weisen ein Hohlkammerprofil auf; die diversen inneren Durchgänge der jeweiligen Schiene sind mit der Bezugsziffer 53 bezeichnet. Die beiden von den Schienen 14 aufgenommenen Einsätze 34, 35 sind doppelwandig ausgebildet, wobei sich der jeweilige Einsatz als Schale darstellt, wobei die Wandungsbereiche 54 des doppelwandigen Einsatzes 34 bzw. 35 beabstandet zueinander angeordnet sind. Aufgrund der Profilierung der Schienen 14 und der Einsätze 34, 35 ergibt sich eine hohe Verformungsstabilität dieser Bauteile. Demzufolge und aufgrund der Anordnung des Schienenpaars und der Einsätze 34, 35 zwischen den Sitzen 3 und 4 ergibt sich bei einem Seitencrash zumindest durch den der Crashseite des Fahrzeugs zugewandten Sitz, vorliegend beispielsweise den Fahrersitz 3, ferner die Schienen 14 und die Einsätze 34 und 35 ein Lastpfad L1 für bei einem Seitencrash in das Fahrzeug eingeleitete Kräfte. Dieser Lastpfad L1 ist somit neben dem Lastpfad L2 der Bodengruppe und insbesondere des Sitzquerträgers 55 gebildet.

Bei einem Frontalcrash hingegen bildet das durch die Schienen 14 gebildete Schienenpaar einen Lastpfad L3 zwischen dem Halter 46 und dem dem hinteren Ende der Schienen 14 zugewandten Bereich des Bodens 15. Dieser Lastpfad L3 ist somit zusätzlich zum Lastpfad L4 der Bodengruppe des Fahrzeugs wirksam.

### Bezugszeichenliste

- Innenraum: 1
- Personenkraftwagen: 2
- Fahrersitz: 3
- Rücksitz: 4
- Instrumententafel: 5
- Mitteltunnel: 6
- Verkleidung: 7
- Grundträger: 8
- Konsole: 9
- Fach/Einteilung: 10
- Aufnahme: 11
- Vorderes Teil: 12
- Hinteres Teil: 13
- Bügel: 14
- Boden: 15
- Aufnahmeraum: 16
- Blechhalter: 17
- Schraube: 18
- Halter: 19
- Abstellung: 20
- Schenkel: 21
- Schenkel: 22
- Obere Führung: 23
- Untere Führung: 24
- Schraube: 25
- Halter: 26
- Crash-Strebe: 27
- Schraube: 28
- Mutter: 29
- Schweißbolzen: 30
- Abstandsbolzen: 31
- Schraube: 32
- Verbindungsplatte: 33
- Oberer Einsatz: 34
- Unterer Einsatz: 35
- Flasche: 36
- Tonnenaschenbecher: 37
- Becher: 38
- Deckel: 39
- Compact-Discs: 40
- Sitzschiene: 41
- Sitzwulst: 42
- Beifahrersitz: 43
- Tragstruktur: 44
- Lagerplatte: 45
- Halter: 46
- Instrumentenquerträger: 47
- Crashstrebe: 48
- Lagerelement: 49
- Lagerelementteil: 50
- Lagerelementteil: 51
- Schraubverbindung: 52
- Durchgang: 53
- Wandungsbereich: 54
- Sitzquerträger: 55
- Lastpfad: L1
- Lastpfad: L2
- Lastpfad: L3
- Lastpfad: L4

## Patentansprüche

1. Konsole (9) für ein Fahrzeug (2), insbesondere Mittelkonsole, mit einem Schienenpaar zur im wesentlichen horizontal verschiebbaren Aufnahme von Einsätzen (34, 35) der Konsole (9) zwischen den Schienen (14,14) des Schienenpaars in Führungen (23, 24) der Schienen (14, 14), sowie einem Stauraum zwischen den Einsätzen (34, 35) und dem Boden (15) des Fahrzeugs (2), **dadurch gekennzeichnet, dass** die Schienen (14, 14) als freistehende Bügel ausgebildet sind, wobei die Schienen (14, 14) mit ihren hinteren Enden im Boden (15) des Fahrzeugs gelagert sind, und im Bereich ihrer vorderen Enden in einem Halter (46) für die Instrumententafel des Fahrzeugs oder in einem Halter für eine Abdeckung eines Schalt- oder Wählhebels des Fahrzeugs gelagert sind, wobei die Schienen (14, 14) vorne mittels eines zweiteiligen Lagerelements (49) im Halter (46) gelagert sind und die beiden miteinander verbundenen Lagerelementteile (50, 51) des Lagerelements (49) zueinander ausrichtbar sind.

2. Konsole nach Anspruch 1, **dadurch gekennzeichnet, dass** die beiden Lagerelementteile (50, 51) des Lagerelements (49) in zwei Koordinatenrichtungen zueinander ausrichtbar sind.

3. Konsole nach Anspruch 1 oder 2, **dadurch gekennzeichnet, dass** die beiden Lagerelementteile (50, 51) senkrecht zur Längserstreckung der Schienen (14, 14) in den zwei Koordinatenrichtungen zueinander ausrichtbar sind.

4. Konsole nach einem der Ansprüche 1 bis 3, **dadurch gekennzeichnet, dass** die beiden Lagerelementteile (50, 51) des Lagerelements (49) miteinander verschraubbar sind.

5. Konsole nach einem der Ansprüche 1 bis 4, **dadurch gekennzeichnet, dass** der Halter (46) mit dem Boden (15) verbunden ist.

6. Konsole nach einem der Ansprüche 1 bis 5, **dadurch gekennzeichnet, dass** das Schienenpaar zwischen Sitzen (3, 43) des Fahrzeugs angeordnet ist und bei einem Seitencrash zumindest durch den der Crashseite des Fahrzeugs zugewandten Sitz (3 bzw. 4), die Schienen (14, 14) und mindestens einen der Einsätze (34, 35) einen Lastpfad (L1) für bei dem Seitencrash in das Fahrzeug eingeleitete Kräfte gebildet ist.

7. Konsole nach einem der Ansprüche 1 bis 6, **dadurch gekennzeichnet, dass** das Schienenpaar bei einem Frontalcrash einen Lastpfad (L3) zwischen dem Halter (46) und dem Boden (15) bildet.

8. Konsole nach Anspruch 7, **dadurch gekennzeichnet, dass** der jeweilige Bügel (14) zwei übereinander angeordnete Führungen (23, 24) zur Aufnahme von Einsätzen (34, 35) in unterschiedlichen Ebenen aufweist.

9. Konsole nach Anspruch 7 oder 8, **dadurch gekennzeichnet, dass** die jeweilige Führung (23, 24) in einem oberen Endbereich des zugeordneten Bügels (14) offen ist.

10. Konsole nach einem der Ansprüche 7 bis 9, **dadurch gekennzeichnet, dass** Mittel zum Verriegeln der Einsätze (34, 35) bezüglich der Führungen (23, 24) vorgesehen sind.

11. Konsole nach einem der Ansprüche 7 bis 10, **dadurch gekennzeichnet, dass** die Bügel (14, 14) aus Metall und/oder Kunststoff bestehen.

12. Konsole nach einem der Ansprüche 7 bis 10, **dadurch gekennzeichnet, dass** die Bügel (14, 14) im Bereich ihres der Instrumententafel (5) abgewandten Endes mit den Boden (15) des Fahrzeuges (2), insbesondere mit dem Boden im Bereich des Mitteltunnels (6) des Fahrzeuges (2) verbunden sind.

13. Konsole nach einem der Ansprüche 7 bis 12, **dadurch gekennzeichnet, dass** die Bügel (14, 14), die im Bereich ihrer der Instrumententafel (5) zugewandten vorderen Enden in einem Halter für die Instrumententafel oder einem Halter (19) für eine Abdeckung eines Schalthebels/Wählhebels des Fahrzeuges gelagert sind, mit diesen Teilen befestigt sind.

14. Konsole nach einem der Ansprüche 7 bis 13, **dadurch gekennzeichnet, dass** sie einen Grundträger (8) aufweist, der im Boden (15) gelagert ist, insbesondere mit diesem befestigt ist.

15. Konsole nach Anspruch 14, **dadurch gekennzeichnet, dass** der Grundträger (8) mit dem Mitteltunnel (6) des Fahrzeugs (2) verbunden ist.

16. Konsole nach Anspruch 14 oder 15, **dadurch gekennzeichnet, dass** der Grundträger (8) auf seiner Oberseite mit Aufnahmen (10) versehen ist, wobei zwischen diesen und den in die Bügel (14, 14) eingesetzten Einsätzen (34, 35) ein Stauraum gebildet ist.

17. Konsole nach einem der Ansprüche 14 bis 16, **dadurch gekennzeichnet, dass** der Grundträger (8) auf seiner Unterseite mit mindestens einem Aufnahmeraum (16) für entlang des Bodens (15), insbesondere im Bereich des Mitteltunnels (6), verlaufende Komponenten, insbesondere elektrische Komponenten, versehen ist.

18. Konsole nach einem der Ansprüche 14 bis 17, **dadurch gekennzeichnet, dass** der Grundträger (8) sich von der Instrumententafel (5) bis zu den Rücksitzen (4) des Fahrzeugs (2) erstreckt.

19. Konsole nach einem der Ansprüche 14 bis 18, **dadurch gekennzeichnet, dass** der Grundträger (8) mehrteilig gestaltet ist, wobei die Teile (12, 13) des Grundträgers (8) in Längsrichtung des Fahrzeugs (2) hintereinander angeordnet sind.

## Claims

1. A console (9) for a vehicle (2), especially a center console, comprising a pair of rails for accommodating inserts (34, 35) of the console (9) in a substantially horizontally displaceable manner between the rails (14, 14) of the pair of rails in guide means (23, 24) of the rails (14, 14) and a storage space between the inserts (34, 35) and the floor (15) of the vehicle (2), **characterized in that** the rails (14, 14) are arranged as free-standing brackets, with the rails (14, 14) being held with their rear ends in the floor (15) of the vehicle, and being held in the region of their front ends in a holder (46) for the instrument panel of the vehicle or in a holder for a cover of a shift or selector lever of the vehicle, with the rails (14, 14) being held in the holder (46) by means of a two-part bearing element (49) and the two mutually connected being element parts (50, 51) of the bearing element (49) being alignable with respect to one another.

2. A console according to claim 1, **characterized in that** the two bearing element parts (50, 51) of the bearing element (49) can be aligned with respect to one another in two coordinate directions.

3. A console according to claim 1 or 2, **characterized in that** the two bearing element parts (50, 51) are alignable with respect to one another in the two coordinate directions perpendicular to the longitudinal extension of the rails (14, 14).

4. A console according to one of the claims 1 to 3, **characterized in that** the two bearing element parts (50, 51) of the bearing element (49) can be screwed together with each other.

5. A console according to one of the claims 1 to 4, **characterized in that** the holder (46) is connected with the floor (15).

6. A console according to one of the claims 1 to 5, **characterized in that** the pair of rails is arranged between seats (3, 43) of the vehicle and, in the event of a side crash, the rails (14, 14) and at least one of the inserts (34, 35) form a load path (L1) for the forces introduced during the side crash into the vehicle at least by the seat (3 or 4) facing the crash side of the vehicle.

7. A console according to one of the claims 1 to 6, **characterized in that** the pair of rails forms a load path (L3) between the holder (46) and the floor (15) during a frontal crash.

8. A console according to claim 7, **characterized in that** the respective bracket (14) comprises two superimposed guide means (23, 24) for receiving inserts (34, 35) in different planes.

9. A console according to claim 7 or 8, **characterized in that** the respective guide means (23, 24) is open in an open end region of the associated bracket (14).

10. A console according to one of the claims 7 to 9, **characterized in that** means for locking the inserts (34, 35) with respect to the guide means (23, 24) are provided.

11. A console according to one of the claims 7 to 10, **characterized in that** the brackets (14, 14) consist of metal and/or plastic.

12. A console according to one of the claims 7 to 10, **characterized in that** the brackets (14, 14) are connected in the region of their end averted from the instrument panel (5) with the floor (15) of the vehicle (2), especially with the floor in the region of the central tunnel (6) of the vehicle (2).

13. A console according to one of the claims 7 to 12, **characterized in that** the brackets (14, 14) which are held in the region of their front ends facing the instrument panel (5) in a holder for the instrument panel or a holder (19) for a cover of a shift lever/selector lever of the vehicle are fastened with these parts.

14. A console according to one of the claims 7 to 13, **characterized in that** it comprises a base support (8) which is held in the floor (15), especially fastened to the same.

15. A console according to claim 14, **characterized in that** the base support (8) is connected with the central tunnel (6) of the vehicle.

16. A console according to claim 14 or 15, **characterized in that** the base support (8) is provided with receivers (10) on its upper side, with a storage space being formed between the said receivers and the inserts (34, 35) inserted into the brackets (14, 14).

17. A console according to one of the claims 14 to 16, **characterized in that** the base support (8) is provided on its bottom side with at least one receiving space (16) for components, especially electric components, extending along the floor (15), especially in the region of the central tunnel (6).

18. A console according to one of the claims 14 to 17, **characterized in that** the base support (8) extends from the instrument panel (5) to the rear seats (4) of the vehicle (2).

19. A console according to one of the claims 14 to 18, **characterized in that** the base support (8) is arranged in several parts, with the parts (12, 13) of the base support (8) being arranged behind one another in the longitudinal direction of the vehicle (2).

## Revendications

1. Console (9) pour un véhicule (2), en particulier console centrale, avec une paire de rails destinés à recevoir de façon coulissante sensiblement à l'horizontale des inserts (34, 35) de la console (9) entre les rails (14, 14) de la paire de rails dans des guides (23, 24) des rails (14, 14), ainsi qu'un espace de rangement entre les inserts (34, 35) et le plancher (15) du véhicule (2), **caractérisée en ce que** les rails (14, 14) sont conformés comme des étriers indépendants, les rails (14, 14) étant supportés par leurs extrémités arrière dans le plancher (15) du véhicule et supportés au niveau de leurs extrémités avant dans une fixation (46) pour le tableau de bord du véhicule ou dans une fixation pour une couverture d'un levier de changement de vitesses ou de sélection du véhicule, les rails (14, 14) étant supportés à l'avant au moyen d'un élément de support (49) en deux parties dans la fixation (46) et les deux parties d'élément de support (50, 51) reliées entre elles de l'élément de support (49) pouvant être orientées l'une vers l'autre.

2. Console selon la revendication 1, **caractérisée en ce que** les deux parties d'élément de support (50, 51) de l'élément de support (49) peuvent être orientées l'une vers l'autre dans deux directions de coordonnées.

3. Console selon la revendication 1 ou 2, **caractérisée en ce que** les deux parties d'élément de support (50, 51) peuvent être orientées l'une vers l'autre perpendiculairement à l'extension longitudinale des rails (14, 14) dans deux directions de coordonnées.

4. Console selon l'une des revendications 1 à 3, **caractérisée en ce que** les deux parties d'élément de support (50, 51) de l'élément de support (49) peuvent être vissées ensemble.

5. Console selon l'une des revendications 1 à 4, **caractérisée en ce que** la fixation (46) est assemblée au plancher (15).

6. Console selon l'une des revendications 1 à 5, **caractérisée en ce que** la paire de rails est disposée entre des sièges (3, 43) du véhicule et en cas de collision latérale, un trajet de charge (L1) pour les forces transmises au véhicule par la collision latérale est formé au moins par le siège du véhicule (3 ou 4) situé du côté de l'impact dans le véhicule, les rails (14, 14) et au moins un des inserts (34, 35).

7. Console selon l'une des revendications 1 à 6, **caractérisée en ce que** la paire de rails forme en cas de collision frontale un trajet de charge (L3) entre le support (46) et le plancher (15).

8. Console selon la revendication 7, **caractérisée en ce que** chaque étrier (14) présente deux guides (23, 24) disposés l'un au-dessus de l'autre destinés à recevoir des inserts (34, 35) à des niveaux différents.

9. Console selon la revendication 7 ou 8, **caractérisée en ce que** chaque guide (23, 24) est ouvert dans une zone d'extrémité supérieure de l'étrier (14) correspondant.

10. Console selon l'une des revendications 7 à 9, **caractérisée en ce que** des moyens sont prévus pour verrouiller les inserts (34, 35) par rapport aux guides (23, 24).

11. Console selon l'une des revendications 7 à 10, **caractérisée en ce que** les étriers (14, 14) se composent de métal et/ou de matière plastique.

12. Console selon l'une des revendications 7 à 10, **caractérisée en ce que** les étriers (14, 14) sont reliés au niveau de leur extrémité opposée au tableau de bord (5) avec le plancher (15) du véhicule (2), en particulier avec le plancher au niveau du tunnel central (6) du véhicule (2).

13. Console selon l'une des revendications 7 à 12, **caractérisée en ce que** les étriers (14, 14), qui sont supportés au niveau de leurs extrémités avant dirigées vers le tableau de bord (5) dans une fixation pour le tableau de bord ou une fixation (19) pour la couverture d'un levier de changement de vitesses ou levier de sélection du véhicule, sont fixés à ces éléments.

14. Console selon l'une des revendications 7 à 13, **caractérisée en ce qu'**elle présente un support de base (8) qui est supporté dans le plancher (15), en particulier fixé à celui-ci.

15. Console selon la revendication 14, **caractérisée en ce que** le support de base (8) est assemblé au tunnel central (6) du véhicule (2).

16. Console selon la revendication 14 ou 15, **caractérisée en ce que** le support de base (8) est doté sur sa face supérieure de logements (10), un espace de rangement étant formé entre ceux-ci et les inserts (34, 35) insérés dans l'étrier (14, 14).

17. Console selon l'une des revendications 14 à 16, **caractérisée en ce que** le support de base (8) est muni sur sa face inférieure d'au moins un espace de logement (16) pour des composants courant le long du plancher (15), en particulier au niveau du tunnel central (6), en particulier des composants électriques.

18. Console selon l'une des revendications 14 à 17, **caractérisée en ce que** le support de base (8) s'étend du tableau de bord (5) aux sièges arrière (4) du véhicule (2).

19. Console selon l'une des revendications 14 à 18, **caractérisée en ce que** le support de base (8) est conçu en plusieurs parties, les parties (12, 13) du support de base (8) étant disposées les uns derrière les autres dans le sens longitudinal du véhicule (2).
